# EUROPEAN PATENT APPLICATION

(11) **EP 1 560 405 A1**
(43) Date of publication of application: **03.08.2005**
(21) Application number: 04001870.7
(22) Date of filing: 29.01.2004
(51) Int. Cl.: H04M 1/725

(54) **Audio processing in communication terminals**

(71) Applicant: Sony Ericsson Mobile Communications AB, 221 88 Lund (SE)
(72) Inventor: Wingren, Gustav, 224 68 Lund (SE)
(74) Representative: Lindberg, Olle Nils Olof

(57) **Abstract**

Communication terminal (10), comprising an interface (11) for input of a first audio signal, a communication signal generator (13) for generating a communication signal from said first audio signal, and a transmitter (14) for transmitting said communication signal to a receiver. Furthermore, a signal processor (15) is connected to said communication signal generator for adding an audio effect to said first audio signal in said communication signal. The audio effect may be a background sound to said first audio signal, or a distortion of said first audio signal. Preferably, the terminal is a radio communication terminal usable for wireless communication purposes.

## Description

### Field of the invention

The present invention relates to communication terminals and methods for use in such communication terminals, and in particular to processing and transmitting communication signals representing audio or sound signals. More specifically, it relates to adding audio effects to input speech prior to transmitting a communication signal representing the input speech.

### Background

The first commercially attractive cellular telephones or terminals were introduced in the market at the end of the 1980's. Since then, the mobile phone industry has had an enormous development both regarding quality of service and transmission capabilities, as well as the technology for producing advanced communications terminals. A lot of effort has been made in making smaller terminals, with much help from the miniaturisation of electronic components and the development of more efficient batteries. In only a couple of decades the communication systems have gone from analogue to digital, and at the same time the dimensions of the communication terminals have gone from briefcase size to the pocket size phones of today. Today, numerous manufacturers offer pocket-sized terminals with a wide variety of capabilities and services, such as packet-oriented transmission and multiple radio band coverage. Still today, mobile phones are getting smaller and smaller and the size is generally considered to be an important factor for the end customer. The development in electronics has made it possible to miniaturise the components of the terminals, at the same time making the terminals capable of performing more advanced functions and services. The introduction of new transmission schemes, at present the so-called 3^{rd} generation mobile system and the 4^{th} generation to be expected maybe ten years later, also provides the possibility to convey more advanced data to the wireless communication terminals, such as real time video.

### Summary of the invention

Today, there are state of the art mobile phones that are capable of receiving, saving and sending text messages, for instance in the form of SMS (Short Message Service) or e-mail. For more advance data segments, MMS (Multimedia Message Service) may be employed. MMS is an enhanced short message service for mobile phones that enables graphics, video clips and sound files to be transmitted. Still, the most important function is, and will probably remain, to provide the possibility of speech communication. However, to this date, no real effort has been made to provide capabilities for more advanced audio transmission related to input speech.

A general object of the invention is therefore to provide means for increased functionality related to transmission of signals representing audio, and in particular signals representing speech.

According to a first aspect, this object is fulfilled by a communication terminal, comprising an interface for input of a first audio signal, a communication signal generator for generating a communication signal from said first audio signal, and a transmitter for transmitting said communication signal to a receiver, wherein a signal processor is connected to said communication signal generator for adding an audio effect to said first audio signal in said communication signal.

In one embodiment, said signal processor is capable of adding plural different audio effects, wherein a user control interface, communicatively connected to said signal processor, is usable for selecting audio effects.

Preferably, said user control interface comprises a screen for displaying selectable audio effects.

In one embodiment, said audio effect is a separate sound signal added to the first audio signal.

In a more specific embodiment, a sound file representing said separate sound signal is stored in a memory in said terminal.

Preferably, said communication signal generator is devised to encode said separate sound signal as background sound to said first audio signal.

In one embodiment, said communication signal generator comprises means for adding an audio effect by distorting said first audio signal.

In a more specific embodiment, a parameter file representing instructions on how to distort an audio file is stored in a memory in said terminal.

In one embodiment, said terminal comprises an audio output interface, and means for playing back, through said audio output interface, said first audio signal as affected by an added audio effect.

In a preferred embodiment, said terminal is a radio communication terminal.

According to a second aspect, the object stated above is fulfilled by a method for conveying audio signals from a communication terminal, comprising the steps of:
- inputting a first audio signal by means of an audio input interface;
- adding an audio effect to said first audio signal;
- generating a communication signal from said first audio signal with said added effect, and
- transmitting said communication signal to a signal receiver.

Preferably, said method comprises the step of:
- selecting said audio effect from a plurality of different audio effects, by means of a user control interface.

In one embodiment, said step of adding an audio effect comprises the step of:
- adding a separate sound signal added to the first audio signal.

In a more specific embodiment, said step of adding a separate sound signal comprises the step of:
- retrieving a sound file representing said separate sound signal from a memory in said terminal.

In one embodiment, said step of adding a separate sound signal comprises the step of:
- encoding said separate sound signal as background sound to said first audio signal.

In another embodiment, said step of adding an audio effect comprises the step of:
- distorting said first audio signal.

In a more specific embodiment, said step of distorting said first audio signal comprises the steps of:
- retrieving a parameter file representing instructions on how to distort an audio file from a memory in said terminal; and
- distorting said first audio signal according to the instructions of said parameter file.

In one embodiment, said method comprises the step of:
- playing back said first audio signal as affected by said added audio effect, through an audio output interface of said terminal.

### Brief description of the drawing

The features and advantages of the present invention will be more apparent from the following description of the preferred embodiments with reference to the accompanying drawings, on which
Fig. 1 schematically illustrates a system setup in which embodiments of the present inventive terminal and method are usable; and
Fig. 2 schematically illustrates functional blocks of a communication terminal embodiment of the present invention.

### Detailed description of preferred embodiments

The present description relates to the field of communication terminals. The term communication terminal, also denoted terminal in short in this disclosure, includes all mobile equipment devised for radio communication with a radio station, which radio station also may be mobile terminal or e.g. a stationary base station. Consequently, the term terminal includes mobile telephones, DECT terminals (Digital Enhanced Cordless Telephony), laptop computers with audio input and transmission capabilities, and any other type of radio communication terminal usable for communicating speech. Further, the present invention is equally applicable to stationary devices such as PSTN telephones and desktop computers with audio input and transmission capabilities. Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawing.

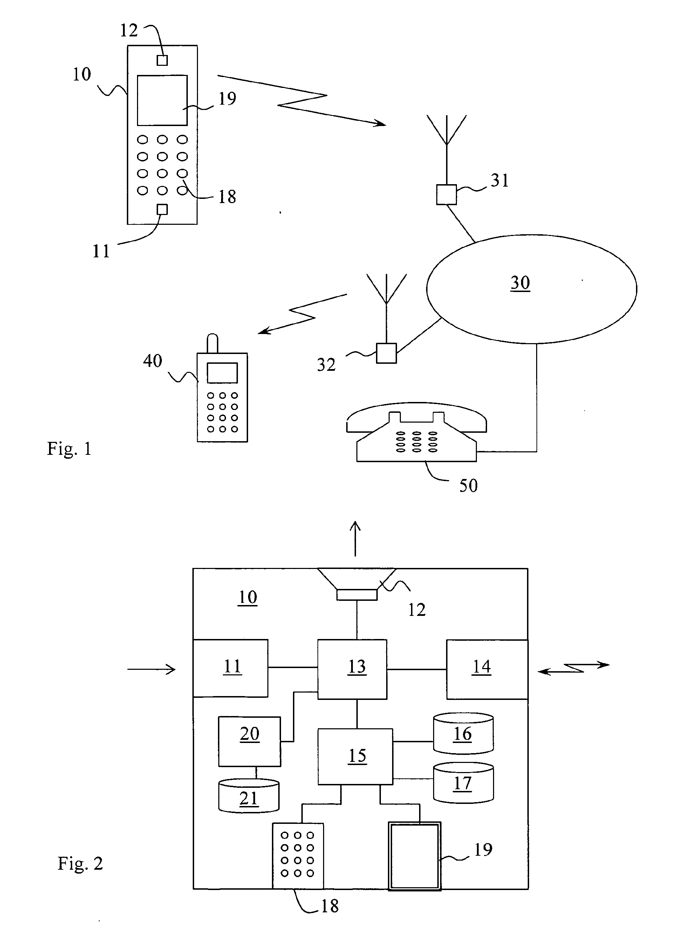

Fig. 1 illustrates a system setup in which the present invention is usable. A first communication terminal 10 is provided, in the form of a digital cellular radio communication terminal, or mobile phone. Terminal 10 comprises a user interface including a keypad 18 for entering control signals, and a screen 19. Alternative embodiments include a touch-sensitive screen 19, which may be used for data input, as is well known in the state of the art. For entering audio signals, terminal 10 further includes an audio input interface in the form of a microphone 11. The audio input interface may also include an audio data input member, such as a connector to an external audio player, or a memory for storing audio data. A speaker 12 will generally also be included.

In ordinary use of terminal 10 for telephone communication purposes, a user will speak into microphone 11 for entering audio signals, which audio signals are processed and encoded to a radio signal which is transmitted to a receiving party, such as one or more other persons, or a recording apparatus. Speaker 12 is used by the user for receiving audio signals which have been retrieved from decoded communication signals received by terminal 10, e.g. from said receiving party.

In the illustrated embodiment, terminal 10 is a radio communication terminal, which as such is communicatively connectable to a base station 31, which forms part of a communications network 30. Terminal 10 may be connected to another radio communication terminal 40 over said communications network 30, by means of a base station 32, or to a stationary terminal 50 by means of a wired connection from communications network 30.

Fig. 2 shows a block diagram schematically illustrating functional components of a radio communication terminal 10 according to an embodiment of the invention. A microphone 11 is usable for entering audio signals, in particular speech. A communication signal generator 13 is connected to microphone 11, for generating communication signals from entered audio signals. Communication signal generator 13 is adapted for both encoding audio signals into communication signals, and for decoding communications signals to retrieve audio signals. For outputting audio signals from terminal 10, a speaker 12 is further included, connected to signal generator 13. Signal generator 13 is further connected to a communication signal transmitter 14, preferably devised to act both as a transmitter and a receiver. In this particular embodiment, said transmitter is a radio transceiver 14 including an antenna, devised for radio communication purposes. In alternative embodiments, said communication signal transmitter 14 may be a transceiver for wire-bound communication.

According to the invention, a signal processor 15 is further operatively connected to said communication signal generator, for adding audio effects to entered audio signals encoded into communication signals. This way, audio that is inputted in a first state, may be affected and stored or transmitted in a second affected state. Typically, signal processor 15 is usable for adding sound effects to input speech. It should be noted that even though signal processor 15 is illustrated as being separate from signal generator 13, they may of course physically form part of a common processor circuit, having associated software. In a preferred embodiment, signal processor 15 is a DSP, Digital Signal Processor. A DSP is a special-purpose CPU, Central Processing Unit, used for digital signal processing. It provides ultra-fast instruction sequences, such as shift and add, and multiply and add, which are commonly used in math-intensive signal processing applications. DSP chips are widely used in a myriad of devices, including sound cards, fax machines, modems, cellular phones, high-capacity hard disks and digital TVs, and involves techniques which are well known to the skilled person.

In a preferred embodiment, addition of audio effects to audio signals, in particular speech but applicable to any input audio signal, is controllable from the user interface of terminal 10. For example, an item denoted Sound Effects may be accessible and presentable on display 19. In one embodiment, a menu including different types of audio effects may be presentable on display 19, after activation of a menu header using a cursor, a key of keypad 18, or a stylus usable together with a touch-sensitive display 19. Said different types of audio effects can then be selectively activated to be applied to e.g. all outgoing calls, to a specific recipient, or when responding calls from a predetermined recipient. The different types of audio effects may include both pure addable background sounds, represented by sound files which are looped in the background of the audio signal and encoded in the same outgoing communication signal, and distortion effects to be applied to audio signals encoded in outgoing communication signals. The user interface is preferably also usable for activation and deactivation of audio effects, advantageously also during a call.

In one embodiment, terminal 10 also comprises an audio data recorder and player 20, and an audio data memory 21 connected thereto, for storing recorded input audio signals and audio signals, with or without added audio effects. Use of such an embodiment may include the steps of entering an audio signal by means of audio input 11; recording and storing the entered audio signal by means of recorder 20 in memory 21; and subsequently playing back the entered audio signal by means of player 20, as affected by the audio effect added by means of signal processor 15, through audio output 12. By being able to play back the affected audio signal after entry or input to the terminal, it is possible for the user to appreciate how the added audio effect will be perceived by a party receiving a communication signal representing the audio signal with the added effect, prior to actually transmitting the communication signal. This gives the user an advantageous opportunity to change added effects, or add more effects, in order to get obtain a desired result. The audio signal may be stored in memory 21 in an unaffected state, wherein the stored audio signal is added with the audio effect upon the subsequent playback. Alternatively, the input audio signal may first be added with the audio effect or effects, and then be stored in memory 21. In yet another variant, both the input audio signal and the affected signal are stored in memory 21. Audio data may e.g. be stored in memory 21 as wav files or in another suitable format.

In one embodiment the audio effect or sound effect is a separate sound signal, which is added to the first audio signal by means of signal processor 15. Such a separate sound signal may e.g. represent background sound to the speech or other audio signal. The separate sound signal is encoded into the communication signal together with the input audio signal such that, when decoded from said communication signal by a receiver, a background sound is added to the audio signal. For instance, a separate sound signal may be added which generates a background sound which makes a receiving party believe that the user, i.e. the calling party, is located at a particular place of which said background sound is representative. Different examples of such location-related background sounds are a beach, with a blowing wind and sounds of waves hitting the beach, or a party with music, laughter and general noise, etc. In a preferred embodiment, sound files representing such separate sound signals are stored in a memory 16 in terminal 10, which memory is accessible by signal processor 15, advantageously by means of the aforementioned menu displayed on screen 19. In a preferred embodiment, such sound files may also be downloadable from external sources, e.g. through communications network 30 or the Internet, to memory 16. The sound files may be wav files or any other sound format.

In another embodiment, communication signal processor 15 comprises means for adding an audio effect by distorting said first audio signal. Preferably, parameter files representing instructions on how to distort an audio file are stored in a memory 17 in said terminal. Also such parameter files may be downloadable from external sources, e.g. through communications network 30 or the Internet, to memory 17. The distortion of the audio signal may e.g. involve a modification of the audio signal for adding an echo effect. Another alternative may be to change the pitch of the voice, for generating a Donald Duck like voice.

A combination of the mentioned embodiments is also possible. By combining a background sound with a distortion of the audio signal, an even more convincing effect in the transmitted signal can be achieved. For instance, an echo effect combined with the sound of an organ, would give a strong impression that the calling party is in a church. A voice signal that randomly rises and falls in magnitude, combined with sounds of seagulls and flapping sails, would lead the receiving party to believe that the user is located on a sailing boat.

As the skilled person realises, these are merely examples, which may well be varied within the scope of the concept of adding audio effects to audio signals prior to transmitting communication signals representing said audio signals.

The present invention is preferably applied in a radio communication terminal, usable for wireless communication purposes. However, as mentioned, the invention is as such applicable to any type of communication terminal devised for transmission of audio signals to a receiving terminal.

The principles of the present invention have been described in the foregoing by examples of embodiments or modes of operations. However, the invention should not be construed as being limited to the particular embodiments discussed above. On the contrary, the above described more or less specific embodiments should be regarded as illustrative rather than restrictive, and it should be appreciated that variations may be made in those embodiments by persons skilled in the art, without departing from the scope of the present invention as defined by the appended claims.

## Claims

1. Communication terminal (10), comprising an interface (11) for input of a first audio signal, a communication signal generator (13) for generating a communication signal from said first audio signal, and a transmitter (14) for transmitting said communication signal to a receiver, **characterised in that** a signal processor (15) is connected to said communication signal generator for adding an audio effect to said first audio signal in said communication signal.

2. The communication terminal as recited in claim 1, **characterised in that** said signal processor is capable of adding plural different audio effects, wherein a user control interface (18,19), communicatively connected to said signal processor, is usable for selecting audio effects.

3. The communication terminal as recited in claim 2, **characterised in that** said user control interface comprises a screen (19) for displaying selectable audio effects.

4. The communication terminal as recited in any of the preceding claims, **characterised in that** said audio effect is a separate sound signal added to the first audio signal.

5. The communication terminal as recited in claim 4, **characterised in that** a sound file representing said separate sound signal is stored in a memory (16) in said terminal.

6. The communication terminal as recited in claim 4 or 5, **characterised in that** said communication signal generator is devised to encode said separate sound signal as background sound to said first audio signal.

7. The communication terminal as recited in any of the preceding claims 1-3, **characterised in that** said communication signal generator comprises means for adding an audio effect by distorting said first audio signal.

8. The communication terminal as recited in claim 7, **characterised in that** a parameter file representing instructions on how to distort an audio file is stored in a memory (17) in said terminal.

9. The communication terminal as recited in any of the preceding claims, **characterised in that** said terminal comprises an audio output interface (12), and means (20,21) for recording and playing back, through said audio output interface, said first audio signal as affected by an added audio effect.

10. The communication terminal as recited in any of the preceding claims, **characterised in that** said terminal is a radio communication terminal.

11. Method for conveying audio signals from a communication terminal, comprising the steps of:
- inputting a first audio signal by means of an audio input interface;
- adding an audio effect to said first audio signal;
- generating a communication signal from said first audio signal with said added effect, and
- transmitting said communication signal to a signal receiver.

12. The method as recited in claim 11, comprising the step of:
- selecting said audio effect from a plurality of different audio effects, by means of a user control interface.

13. The method as recited in claim 11 or 12, wherein said step of adding an audio effect comprises the step of:
- adding a separate sound signal added to the first audio signal.

14. The method as recited in claim 13, wherein said step of adding a separate sound signal comprises the step of:
- retrieving a sound file representing said separate sound signal from a memory in said terminal.

15. The method as recited in claim 13 or 14, wherein said step of adding a separate sound signal comprises the step of:
- encoding said separate sound signal as background sound to said first audio signal.

16. The method as recited in claim 11 or 12, wherein said step of adding an audio effect comprises the step of:
- distorting said first audio signal.

17. The method as recited in claim 14, wherein said step of distorting said first audio signal comprises the steps of:
- retrieving a parameter file representing instructions on how to distort an audio file from a memory in said terminal; and
- distorting said first audio signal according to the instructions of said parameter file.

18. The method as recited in any of the previous claims 11-17, comprising the step of:
- playing back said first audio signal as affected by said added audio effect, through an audio output interface of said terminal.
